Europäisches Patentamt

European Patent Office

Office européen des brevets

(19)

(11) Publication number: **0 019 968**
A1

(12) **EUROPEAN PATENT APPLICATION**

(21) Application number: 80200455.6

(22) Date of filing: 14.05.80

(51) Int. Cl.³: **F 17 C 13/12**, G 01 M 3/22

(30) Priority: 29.05.79 GB 7918657
19.02.80 GB 8005542

(43) Date of publication of application: 10.12.80
Bulletin 80/25

(84) Designated Contracting States: DE FR GB IT NL SE

(71) Applicant: **SHELL INTERNATIONALE RESEARCH MAATSCHAPPIJ B.V., Carel van Bylandtlaan 30, NL-2596 HR DEN HAAG (NL)**

(72) Inventor: **Collins, Michael Harry, Maes Derw Main Road, Huxley Nr Chester Cheshire (GB)**
Inventor: **Cotgreave, Terence, 56 Linden Avenue Connahs Quay, Deeside Clwyd CH5 4SW (GB)**

(74) Representative: **Keuzenkamp, Abraham et al, c/o Shell Internationale Research Maatschappij B.V. P.O. Box 302, NL-2501 CH 's-Gravenhage (NL)**

(54) **A system for detecting cracks in the heat-insulating lining of a container for liquefied gas.**

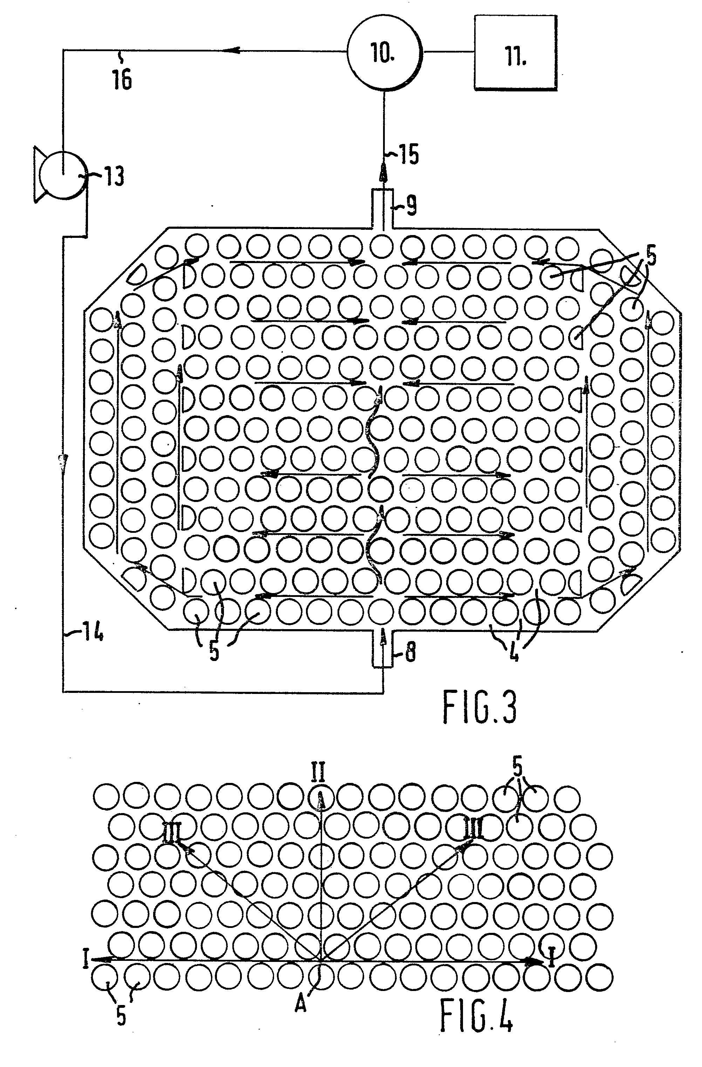

(57) A problem with tanks for storing liquefied gases is the development of cracks in the heat-insulating lining of the tank. Methods have been proposed for the detecting of cracks occurring in the lining comprising passing a purging gas, for example nitrogen, through a channelled layer 4 in the heat-insulating lining to a gas-analyzer 10. Contamination of the purging gas by the contents of the tank, which can be detected by the gas-analyzer 10, indicates the presence of a crack in the heat-insulating lining. The invention is directed to an improved design of the channelled layer 4, so that a uniform distribution of the purging fluid along an area to be watched for the development of cracks is obtained. The purging fluid used is preferably a gas, but if desired a purging liquid can be used, instead of a purging gas (figure 3).

1

## A SYSTEM FOR DETECTING CRACKS IN THE HEAT-INSULATING LINING OF A CONTAINER FOR LIQUEFIED GAS

The invention relates to a system for detecting cracks in the heat-insulating lining of a container for liquefied gas having a rigid outer shell internally provided with a heat-insulating lining.

Normally the rigid outer shell of such a container is made of a material, for example normal steel, which is not able to withstand the low temperature of the liquefied gas stored in the container. When a crack develops in the heat-insulating lining of such a container, there is a risk that the contents of the container will cool down the outer shell. In the event that the contents of the container consists, for example, of liquefied natural gas, having a temperature of minus 160°C, the outer shell may cool down to such a degree that, when the outer shell is made of normal steel, it would become brittle and would even deteriorate. Therefore, it is important to have a system by means of which the development of cracks in the heat-insulating lining can be detected at an early stage.

Crack detection systems have been proposed, wherein a channelled layer is incorporated in the heat-insulating lining. Purging gas, preferably nitrogen, is passed through said channelled layer to a gas-analyzer. If some of the contents of the container has leaked into the channelled layer through a crack in the lining, the presence of the crack in the lining can be detected by analyzing the purging gas.

It is the object of the invention to provide an improved embodiment of such a crack detection system, which is more reliable than the known crack detection systems.

The system for detecting cracks in the heat-insulating lining of a container for liquefied gas having a rigid outer

0019968

2

shell internally provided with a heat-insulating lining, comprises according to the invention, a channelled layer having channels so arranged that the fluid flow resistance properties of the layer are different in different directions parallel to the layer, wherein the layer is incorporated in the lining and extends along a wall area which has to be watched for the presence of a crack in the lining of said area, the layer is provided with a fluid inlet and with a fluid outlet for purging fluid, and means are present for the supply of purging fluid to the fluid inlet and for the discharge of purging fluid from the fluid outlet to a fluid analyzer, wherein the channels in the layer are so arranged along the whole area to be watched that the directional fluid flow resistance properties of the channelled layer cause the purging fluid to flow from the fluid inlet to the fluid outlet in such a manner that the purging fluid is uniformly distributed along the whole area to be watched.

The special arrangement of the channels in the channelled layer causes the purging fluid to be uniformly distributed over the whole channelled layer, which has the advantage that the whole area to be watched for the presence of cracks in the heat-insulating lining is covered by the flow of purging fluid.

The known crack detection systems using a channelled layer all have the disadvantage that most of the purging fluid will flow from the fluid inlet to the fluid outlet along the shortest path. In other words no, or hardly any, purging fluid tends to flow to the locations which are remote from said shortest path. In this manner only a part of the lining provided with a channelled layer can be watched effectively. Therefore, the risk that a crack is present, which cannot be traced is considerable, so that the known leak detection systems are rather unreliable.

The invention will be further described with reference to the accompanying drawings, in which

Figure 1 shows a schematic view of a vertical cross-section of a heat-insulated container provided with channelled layers;

Figure 2 shows a detail II of Figure 1 on an enlarged scale;

Figure 3 is a schematic side view of an embodiment of a channelled layer according to the invention;

Figure 4 shows the directional flow properties of part of the channelled layer as shown in figure 3.

In the figures identical parts are indicated by identical reference numerals.

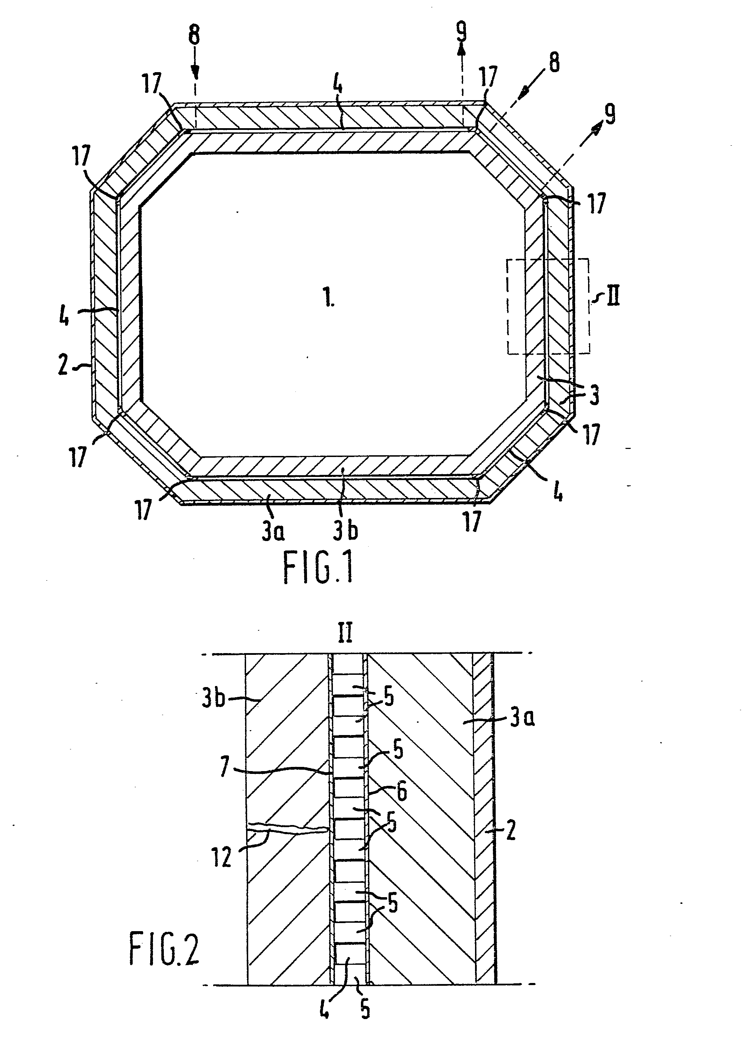

Referring now to the figures 1 and 2, a heat-insulated prismatic container, generally designated by reference numeral 1, comprises a rigid outer shell 2, for example made of normal steel. Along the inner surface of the outer shell 2, a lining 3 of heat-insulating material, for example polyurethane foam, is arranged. This lining 3, which is preferably applied by means of a spraying method, consists of a first heat-insulating layer 3a at the high temperature side of the container and a second heat-insulating layer 3b at the low temperature side of the container. Between the layers 3a and 3b, a channelled layer 4 is arranged. Through this channelled layer a fluid, preferably an inert gas, can be passed for detecting the presence of cracks in the layer 3b. The channelled layer 4 comprises a number of solid obstacles or studs 5, spaced apart from each other and extending between a backing sheet 6 and a closing sheet 7, to which both ends of the studs 5 are attached. The studs 5 which have a length of, for example 3.5 mm, are preferably made of reinforced resin, for example a polyester resin or an epoxy resin, having for example a filling of glass cenospheres and glass fibres. The number of studs 5 per square metre is about 10,000. The backing sheet 6 consists, for example, of a polyester fleece. The closing sheet 7 must be porous to facilitate the flow of some liquefied gas stored in the container

0019968

through a crack 12 in the heat-insulating layer 3b and into the channelled layer 4. The closing sheet 7 may, for example, be made of glass-cloth impregnated with a suitable resin, such as epoxy resin. The channelled layer 4 as shown in figure 1 is divided in sections by barriers 17, each section covering a corresponding wall area and each section having a fluid inlet 8 and a fluid outlet 9 for the purging fluid, which is preferably an inert gas.

Referring now to figure 3, the channelled layer 4 is provided with a fluid inlet 8 and a fluid outlet 9. Inert gas, for example nitrogen serving as purging fluid, is supplied by a pump 13 and through a conduit 14 and fluid inlet 8 to the channelled layer 4. After the gas has passed through the channelled layer 4, it is passed through the fluid outlet 9 and a conduit 15 to a gas-analyzer 10. From the gas-analyzer 10 the purging gas is recycled through a conduit 16 to the pump 13. When the purging gas is contaminated by the liquefied gas stored in the container, this contamination, and thus the presence of a crack in the heat-insulating lining 3b, is detected by the gas-analyzer 10, which then actuates a warning device 11.

As shown in figure 4 the studs 5 are so arranged that uninterrupted passages or channels are present in direction I, and interrupted passages or channels are present in directions II and III, as indicated by the respective arrows. Experiments have shown that the quantity of gas flowing in direction I was about 4 times the quantity of gas flowing in direction II when said gas was supplied at location A to the channelled layer in a direction perpendicular to the plane of said layer. During the same experiment, it was found that the quantity of gas flowing in direction III had a value between the quantities of gas flowing in directions I and II.

Referring back to figure 3, it is shown that in the central part of the channelled layer 4, the uninterrupted passages or channels between the studs 5 are arranged perpendicular to the

5

shortest path between the fluid inlet 8 and the fluid outlet 9. In the areas remote from said path the uninterrupted passages or channels extend parallel to said shortest path. As shown the directions of the uninterrupted passages or channels are obtained by selective placing of the studs 5. In figure 3, the studs 5 are shown on an enlarged scale for the sake of clarity.

When purging gas is introduced through the fluid inlet 8, a considerable amount of the purging gas will flow away from the shortest path between the fluid inlet 8 and the fluid outlet 9 towards areas remote from the shortest path. In this manner the gas will be distributed substantially uniformly over the whole channelled layer 4 as shown by the arrows, without leaving unpurged dead spaces, so that it is ensured that the whole area to be watched will be covered by the purging gas and no cracks present in the heat-insulating lining will be overlooked.

The studs as shown in the drawings have a circular cross-section. However, studs having other cross-sections can be used as well, for example studs having an octagonal cross-section.

It is observed that the invention is not restricted to a whole tank wall provided with a channelled laminate, having a single fluid inlet and a single fluid outlet.

Instead, it is also possible to provide only part of the tank wall with a channelled layer according to the invention, for example those parts of the wall, such as corners, which are difficult to watch with the known leak detection systems. It is also possible to provide the channelled layer with a plurality of fluid inlets and/or fluid outlets.

When bottom-, top- and side walls of a container are all provided with a channelled layer, a gas stream through all the layers can also be obtained by providing the bottom wall with a centrally placed fluid inlet and the top wall with a centrally placed fluid outlet. In this case the purging gas will flow from the fluid inlet through the channelled layer of the bottom wall and to the periphery thereof and then through the

6

channelled layers of all the side walls, to the periphery of the channelled layer of the top wall. Then the gas flows from the periphery of the top wall through the channelled layer of the top wall to the central outlet of the top wall. In that case the barriers 17 are omitted.

It is remarked that the spaces between the studs 5 can be provided with an open cell foam, if desired.

The invention is not restricted to a channelled layer having studs or obstacles spaced apart from each other, as shown in the drawings. Instead, the directional channelled layer may be made of open cell foam, with a porosity varying according to the position of the foam relative to the fluid inlet and the fluid outlet, so that a porous layer is obtained having fluid flow resistance properties dependent on the direction parallel to the channelled layer.

Moreover, it is observed that instead of bonding the obstacles to a backing sheet 6 which is bonded to the layer 3a of heat-insulating lining, the obstacles may be directly bonded to the heat-insulating layer 3a.

If desired, more than one channelled layer can be used. It is, for example, possible to use an additional channelled layer 4 in the heat-insulating layer 3a and close to the rigid outer shell 2 for detecting cracks developing in the heat-insulating layer 3a.

The purging fluid used is preferably a gas but, if desired, it is also possible to use a purging liquid, for example a suitable liquid hydrocarbon.

7

C L A I M S

1.  A system for detecting cracks in the heat-insulating lining of a container for liquefied gas having a rigid outer shell internally provided with a heat-insulating lining, characterized in that the crack detecting system comprises a channelled layer having channels so arranged that the fluid flow resistance properties of the layer are different in different directions parallel to the layer, wherein the layer is incorporated in the lining and extends along a wall area which has to be watched for the presence of a crack in the lining of said area, the layer is provided with a fluid inlet and with a fluid outlet for purging fluid, and means are present for the supply of purging fluid to the fluid inlet and for the discharge of purging fluid from the fluid outlet to a fluid-analyzer, wherein the channels in the layer are so arranged along the whole area to be watched that the directional fluid flow resistance properties of the channelled layer cause the purging fluid to flow from the fluid inlet to the fluid outlet in such a manner that the purging fluid is uniformly distributed along the whole area to be watched.

2.  A system for detecting cracks as claimed in claim 1, characterized in that one fluid inlet for the supply of purging fluid to, and one fluid outlet for the discharge of purging fluid from, the channelled layer are present.

3.  A system for detecting cracks as claimed in any one of the claims 1 to 2, characterized in that it is applied to at least one wall of a prismatic container.

4.  A system for detecting cracks as claimed in any one of the claims 1 to 3, characterized in that the channelled layer comprises studs arranged in such a manner that the purging fluid is caused to flow uniformly over the whole area of the channelled layer.

8

5. A system for detecting cracks as claimed in claim 4, characterized in that the studs are made of a reinforced resin.

6. A system for detecting cracks as claimed in any one of the claims 4 to 5, characterized in that the number of studs per square metre is about 10,000.

7. A system for detecting cracks as claimed in any one of the claims 4 to 6, characterized in that the length of the studs is about 3.5 mm.

8. A system for detecting cracks as claimed in any one of the claims 4 to 7, characterized in that the studs have a cross-sectional shape which is octagonal.

9. A system for detecting cracks as claimed in any one of the claims 4 to 8, characterized in that open cell foam is arranged between the studs.

10. A system for detecting cracks as claimed in any one of the claims 1 to 3, characterized in that the channelled layer comprises open cell foam with a porosity varying in such a manner that the purging fluid is caused to flow uniformly over the whole area of the channelled layer.

0019968

1/2

FIG.1

FIG.2

0019968

FIG.3

FIG.4

European Patent
Office

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | FR - A - 2 256 365 (CONTINENTAL OIL COMP.)<br><br>* From page 3, line 18 - page 6, line 4; figures 1-7 *<br><br>-- | 1,2,4 | F 17 C 13/12<br>G 01 M 3/22 |
| | FR - A - 2 235 332 (MITSUBISHI JUKOGYO K.K.)<br><br>* Page 7, lines 1-20; figures 1-3 *<br><br>-- | 9 | |
| A | FR - A - 2 317 649 (TECHNIGAZ)<br><br>* Page 8, lines 1-22 *<br><br>-- | 1 | TECHNICAL FIELDS SEARCHED (Int.Cl. 3)<br><br>F 17 C 13/12<br>G 01 M 3/22<br> - 3/04<br>G 01 N 15/08 |
| A | US - A - 3 374 639 (C.A. BURKE et al.)<br><br>* Column 1, lines 13-23 *<br><br>---- | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 04-09-1980 | ANTHONY |

EPO Form 1503.1 06.78